# EUROPEAN PATENT SPECIFICATION

(11) **EP 2 916 646 B1**
(45) Date of publication and mention of the grant of the patent: **13.12.2017**
(21) Application number: 12805791.6
(22) Date of filing: 29.10.2012
(51) Int. Cl.: A01D 45/00

(54) **MACHINE FOR HARVESTING, BINDING AND STACKING SHEAVES OF BRAID WICKER**
MASCHINE ZUM ERNTEN, BINDEN UND STAPELN VON BÜNDELN AUS GEFLECHTEN
MACHINE DE RÉCOLTE, D'ATTACHE ET D'EMPILAGE DE GERBES D'OSIER TRESSÉ

(30) Priority: 28.09.2012 PL 40097812
(43) Date of publication of application: 16.09.2015
(73) Proprietor: PRZEMYSLOWY INSTYTUT MASZYN ROLNICZYCH, 60-963 Poznan (PL)
(72) Inventor: FRACKOWIAK, Pawel, 61-341 Poznan (PL); WACHALSKI, Grzegorz, 61-289 Poznan (PL); ADAMCZYK, Florian, 60-159 Poznan (PL)
(74) Representative: Kowalkiewicz, Wladyslaw
(86) International application number: PCT/PL2012/000119
(87) International publication number: WO 2014/035266

(56) References cited:
- DE-C- 572 837
- GB-A- 2 158 687
- PL-B2- 144 427

## Description

The object of the invention is a machine for harvesting, binding and stacking sheaves of braid wicker, designed for mechanical harvesting on the fields of braid wicker and other high-growing plants.

There are very few machines for cutting and binding wicker in bundles. To a limited extent, adapted, known cereal sheaf binders are used for this purpose. These sheaf binders have a frame based on their wheels, a header, a divider, a reel, inclined belt conveyors, and a binding table. Sheaf binder mechanisms are driven by a tractor power take-off through a central drive system. Wicker is pulled onto the header, like crops, by means of the reel. Position of the cutting platform and the reel is set depending on the height of the cut wicker rods. Rods fall onto a horizontal conveyor, and then, between the inclined conveyors, they are transferred onto the binding table, and then they slide down into a rope loop left on the table by a retractable tier needle. This solution is of limited use when cutting wicker which is higher than 1.5m by an incorrect formation of bundles due to maladjustment of reels and wicker conveyors, causing large waste by loosing the rods. Single binding of bundles makes the rods not parallel, and therefore they are difficult to manipulate and unstable, resulting in further inconveniences in transportation and sorting. Moreover, sliding wicker rods, due to their high hardness, as compared to straw, result in heavier loads on horizontal and inclined conveyor elements affecting their rapid wear. Switching mechanisms consist of thrust turnpike mounted on a shaft, which is coupled at its end with a ratchet-lever mechanism connected to a crank, which in turn, through a chain transmission, activates knotters. As a result, they enable binding of the sheaves only of sufficiently heavy weight, as well as volume, which allows to retract the turnpike. This mechanism only allows for step short-range adjustments of the sheaf size by moving the turnpike lever on its arm, increasing or decreasing the distance from the knotters.
A binder for harvesting high-growing crops, especially wicker, which comprises upper and lower conveyors, mounted to the frame with plate griders, located above a header, wherein upper conveyors extend before the header and grab the rods before they are cut, and lower conveyors grab bottom ends of wicker rods while they are cut by the header, is also known from provisional patent No. PL144427.
Behind the conveyors, there is a set of reels comprising right and left reel, which have, located on levels, reeling arms, which feed the wicker rods to the binding chamber, which is closed by strings sustained by knotter elements, located at two parallel levels. A set of needles cooperates with the knotters by periodically closing the chamber from the other side and feeding the string to the knotters, . Moreover, behind the binding unit, there is an inclined carrier, pulling outside and stacking the bound sheaves on the field, outside of the machine in a distance that allows for a subsequent free working passage. As a result, this unit allows to bind the sheaves only of sufficiently heavy weight, as well as volume, which allows to retract the turnpike. The thrust turnpike is also often blocked by wicker rods falling out, deposited in the flow channel, in a retracted position, which prevents further operation of the entire machine and requires to manually unblock it, which is time-consuming. Another shortcoming is the fact that, during the unhooking of the latch cam and hook, a sudden interruption in the interaction of a large mutual force occurring between the cam of thrust turnpike and the hook, which, in turn, results in sudden movements, combined with mutual strikes of all parts of the mechanism activating the knotters. Sudden movements and mutual strikes of these parts cause their rapid deregulation and wear, and generate an additional, very short, but intensive noise.
A wicker mower with a disc cutting tool, a gripper belt and a basket adapted to agricultural tractor is also known from patent No. PL55779. This machine is designed to cut wicker rods at a regulated, during work time, cutting height, to grab the rods before cutting, to hold them while cutting, and to carry them after cutting to a periodically emptied basket. This machine does not have any binding units for cut wicker rods. This is disadvantageous, because wicker falling out of the basket falls apart; it must be manually bound, in order to be transported from the field to the place of storage and processing.
A harvester is known from the UK patent application description no GB 2158687 A. A harvester comprises a basically parallelepipedal openwork frame adapted mechanically to be progressed along a row of willow stems or of stems of similar biomass material and having therethrough an upwardly-open horizontal passage extending initially rearwardly from the leading end of the frame when progressed and continuing therethrough the frame mounting sequentially along the length of said passage means for quiding the stems there into as the frame is progressed, means for cutting the stems, means for bunding the cut stems, and means for discharging the bundled stems laterally of the frame, the means for bundling the cut stems and the means for discharging the bundled stems being connected to a common crankshaft and comprising a crusher/separator unit retroactively pivotal to move across the passage and compress the bundle, a needle/knotter unit retroactively pivotal in sequence after the crusher/separator to tie the bundle and an ejector plate.

The aim of the invention is to eliminate defects and disadvantages of the machines for harvesting, binding and stacking of the wicker sheaves.

This was achieved by developing a new construction of a pass-through channel with a control signal transmitter and a new construction of mechanisms activating the drives of the binding units, associated with each other, with knotters together with needles, and with a set of ejectors.

The invention relates to binding units one of the side vanes is composed of two parts: a fixed part on the input side of the channel and a movable part, in which the wicker rods are formed into sheaves, the fixed part and the movable part are connected by a flat hinge with a rotary axis perpendicular to the bottom surface, and the other end of the movable part provided with a spring and a plate is slidably mounted and moves in the side wall of the channel, till the sheaf reaches the desired width in its middle part, then its end provided with the plate activates the signal transmitter, which transmits a signal to the actuator via a control element, whereas the actuator coupled to the switching mechanism activates the drive shaft of the binding units for the execution of one rotation of the shaft, with which the drives of knotters together with the drives of the needles and with the drive of the wicker sheaf ejectors are associated, one sheaf being bound and then elevated onto the output conveyor during this one rotation, and in the final phase, the binding units are set in their initial position for binding and moving the next wicker sheaf.
The preferred solution is when the signal transmitter is constituted by a limit switch connected to the movable part of the vane placed in the mid-height of the pass-through chamber.
The preferred solution is when the control element is constituted by a solenoid valve. The preferred solution is when the actuator is constituted by an actuator which is, depending on its construction, pneumatic, hydraulic, electric.
The preferred solution is when the switching system has the actuator which, via a latch hook accosted to it, pulls the elements of the latch lock, causing it to retract and simultaneously releases the rotation lock of the drive shaft of the knotters, which causes rotation of the shaft of the knotters and activation of the sheaf binding process.

The invention allows for smoother movement of wicker rods and binding them into sheaves at a given uniform volume for wicker rods with different cross-sections for harvest in changing weather conditions and plant vegetation, as the elements controlling the binding units are located in the side wall of the pass-through channel, without limiting its permeability and working section, moreover, the used technical solution allows for accurate positioning of selected settings for the formation of sheaves of a desired volume and higher productivity of the machine while harvesting wicker is achieved by eliminating downtimes caused by maintenance and removal of residual unbound sheaves and rods deposited in the flow channel. The use of servos allowed to increase the construction reliability by eliminating quickly worn elements of the mechanical system activating the knotters, by reducing service nuisances, and reduced the noise during machine operation.
Thanks to the use of the solution according to the invention, metal parts mechanically activating the knotters allowing, only to a small extent, to adjust the size of the sheaf and generating large instantaneous forces in mechanisms cooperating with each other and temporary noise of considerable intensity. The use of the solution according to the invention allows for smooth, unrestricted adjustment of the sheaf size, reduces the mutual forces between cooperating mechanisms by eliminating the thrust turnpike mechanically pulling the hook for the latch release of the knotters drive shaft, and through a smoother release of the latch, also generates noise of lower intensity.

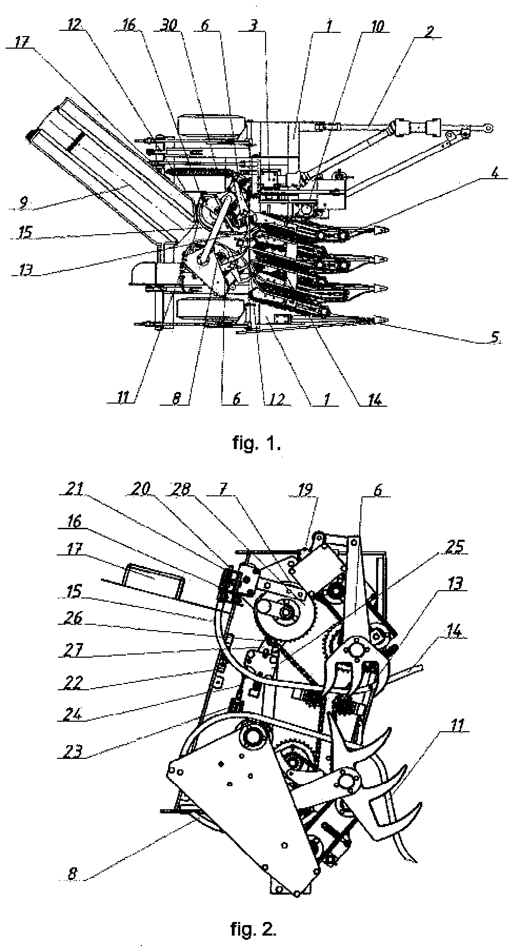

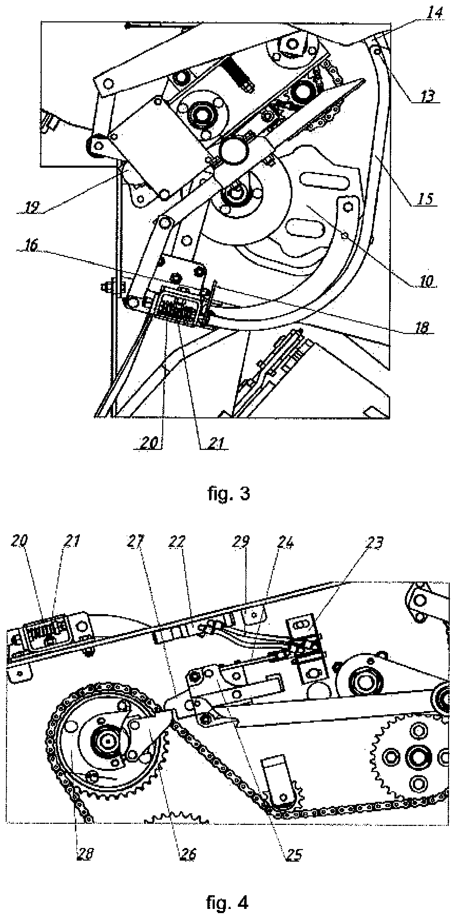

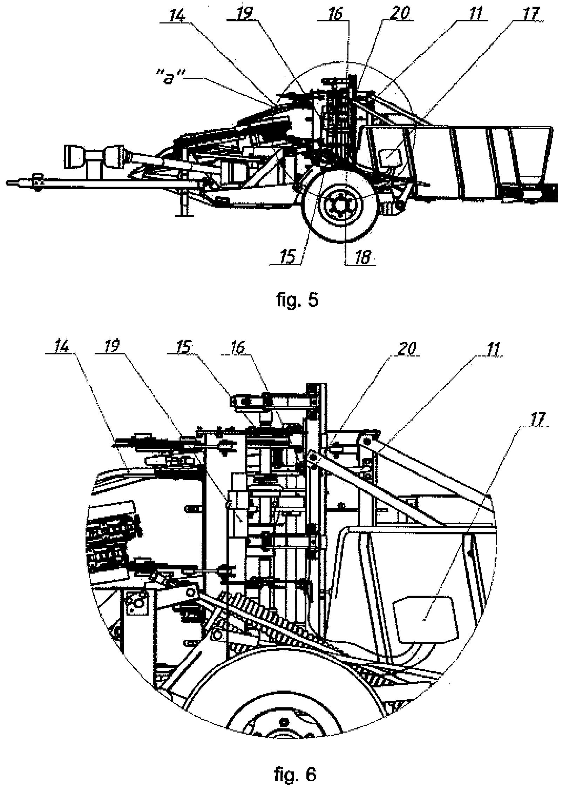

The object of the invention is visualized in the drawing, in which Figure 1 schematically shows the device from a top view, Figure 2 - shows parts of the system activating the knotters and their location in the machine from a top view, Figure 3 - shows control elements in the system activating the knotters from a top view, Figure 4 - shows elements activating the knotters from a bottom view, Figure 5 - shows the device from a bottom view, Figure 6 section of the device from a side view, as shown in Figure 5, marked with a circle, which, when enlarged, shows the elements of the system activating the knotters and their location in the machine.

The machine comprises feeding conveyor units 4 and 5, a header 10, and an output conveyor 9 with drives directly associated with a main gear 3 and comprising binding units 7 with knotters together with a set of needles 8 and with a set of ejectors having their drives associated with each other and connected by their mutual drive shaft 28 with the main gear 3. The binding units 7 have a pass-through channel provided with arcuately rounded side vanes 11 and 12 and a flat bottom, along which loose wicker rods move till the end of the channel in a close to vertical position. The side vane 12 is composed of two parts: a fixed part 14 on the input side of the channel and of a movable part 15, in which wicker rods are formed into sheaves, the fixed part 14 and the movable part 15 of the vane 12 are connected by a flat hinge 13 with a rotary axis perpendicular to the bottom surface, and the other end of the movable part 15 provided with a spring 21 and a plate 18 is slidably mounted and moves in the side wall of the channel, until the sheaf reaches a desired width in its middle part, then its end provided with the plate activates the signal transmitter 16, which transmits a signal to an actuator 23 via a control element 17, whereas the actuator 23 coupled to the switching mechanism activates the drive shaft 28 of the binding units 7 for the execution of one rotation of the shaft, with which the drives of knotters together with the drives of the set of needles 8 and with the drive of the wicker sheaf ejectors are associated, one sheaf being bound and then elevated on the output conveyor 9 during this one rotation, and in the final phase, the binding units 7 are set in their initial position for binding and moving the next wicker sheaf.
The signal transmitter 16 is constituted by a limit switch connected to the movable part 15 of the vane 12 placed in the mid-height of the pass-through chamber.
The actuator is constituted by an actuator 23 which is, depending on its construction, pneumatic, hydraulic, electric.
The switching system has the actuator 23 which, via a latch hook accosted to it, pulls the elements of the latch lock, causing it to retract and simultaneously releases the rotation lock of the drive shaft of the knotters, which causes rotation of the shaft of the knotters and activation of the sheaf binding process.
The control system, using the signals from the signal transmitter 16 of the material mass flow located in the channel of the binding unit 7, via a solenoid valve 22, controls the system activating the knotters of the actuator 23 which is, depending on its construction, pneumatic, hydraulic, electric. The control system, located in a box mounted to the construction parts of the machine, is powered by direct current from a tractor external installation on one side, and on the other side it is connected by electric wires, one with the signal transmitter 16 for adjusting the sheaf size, and the other with the solenoid valve 22 for controlling the actuator 23 activating the binding units 7 on the other side.

For adjusting the sheaf size, there are two drawing aside vanes: right 11 and left 12, in the form of pipes of appropriate shapes positioned relative to the axis of symmetry of the pass-through chamber for sheaf formation in such a way that the right vanes are a mirror image of the position of the left vanes, constituting a preferable wedge-like shape of the pass-through chamber. The left vane 12 is provided with a hinge 13 joining pivotally its two parts in such a way that a part 14 of the arm on the material input side is fixed, and the other part 15 bends when the amount of material in the chamber increases. A plate 18 pressing a mandrel 20 of the signal transmitter 16, on which a spring is mounted 21 which has an adequate elasticity adjusting the pressure of the movable part 15 of the left leading arm and which protects against too early pressing the mandrel 20 of the signal transmitter and against sending an impulse to the control element 17, is mounted to the movable part 15 of the left leading arm in an appropriate distance to the hinge 13. The signal transmitter 16 is screwed in a suitable place to the fixed construction elements of the machine in a way enabling to adjust its position relative to the movable part 15 of the arm with the hinge 13 in a horizontal plane.
The control system receives impulses from the signal transmitter of the sheaf size control unit.
The system activating the knotters is further characterized in that the control system sends an impulse, received from the signal transmitter of the sheaf size control unit. to the solenoid valve 22 connected on one side by wires 29 to an appropriate tractor system, which is, depending on its construction, pneumatic, hydraulic, electric, and on the other side connected by wires 29 to the actuator, which is, depending on its construction, pneumatic, hydraulic, electric, which, via a latch hook 25 accosted to it, pulls the elements of the latch lock 25, causing the latch 25 to retract and the rotation lock 27, and thereby releases the driver 26 of the drive wheel 28 of the knotters shaft, which causes rotation of the knotters shaft, start of the knotters activation process and formation of the sheaf.

## Claims

1. A machine for harvesting, binding and stacking sheaves of braid wicker, comprises feeding conveyor units (4) and (5), a header (10), reel units and an output conveyor (9) with drives directly associated with a main gear and binding units (7) with knotters together with a set of needles (8) and with a set of ejectors having their drives associated with each other and connected by their mutual drive shaft with the main gear (3), whereby the binding units (7) have a pass-through channel provided with arcuately rounded side vanes (11) and (12) and a flat bottom, along which loose wicker rods move till the end of the channel in a close-to-vertical position **characterized in that** one of the side vanes (12) is composed of two parts: a fixed part (14) on the input side of the channel and of a movable part (15), in which the wicker rods are formed into sheaves, the fixed part (14) and the movable part (15) of the vane (12) are connected by a flat hinge (13) with a rotary axis perpendicular to the bottom surface, and the other end of the movable part (15) provided with a spring (21) and a plate (18) is slidably mounted and moves in the side wall of the channel, till the sheaf reaches a desired width in its middle part, then it connects to a signal transmitter (16), which transmits a signal to an actuator (23) via a control element (17), whereas the drive actuator (23) coupled to the switching mechanism activates the drive shaft of the binding units, for the execution of one rotation of the shaft, with which the drives of knotters together with the drives of the set of needles (8) and with the drive of the wicker sheaf ejectors are associated, one sheaf being bound and then elevated onto the output conveyor (9) during this one rotation, and in the final phase, the binding units (7) are set in their initial position for binding and moving the next wicker sheaf.

2. The machine according to claim 1, **characterized in that** the signal transmitter (16) constituting a limit switch is connected to the movable part (15) of the vane (12) placed in the mid-height of the pass-through chamber.

3. The machine according to claim 1, **characterized in that** the control element is constituted by the solenoid valve (22).

4. The machine according to claim 1, **characterized in that** the actuator is constituted by the actuator (23) which is, depending on its construction, pneumatic, hydraulic, electric

5. The machine according to claim 1, **characterized in that** the switching system has the actuator (23) which, via a latch hook accosted to it, pulls the elements of the latch lock, causing it to retract and simultaneously releases the rotation lock (27) of the drive shaft of the knotters, which causes rotation of the shaft of the knotters and activation of the sheaf binding process.

## Patentansprüche

1. Maschine zum Sammeln, Binden und Stapeln von Flechtweidebündeln, aufweisend einen Beschickungsförderereinheiten (4) und (5), ein Kopfstück (10), Spuleneinheiten und einen Ausgangsförderer (9) mit Antrieben, die direkt mit dem Hauptgetriebe und den Bindungseinheiten (7) zusammen mit Knotenbildnern mit einem Satz Nadeln (8) verbunden sind, und mit einem Satz von Auswerfern, deren Antriebe miteinander verbunden und mittels deren gemeinsamer Antriebswelle mit dem Hauptgetriebe (3) verbunden sind, wobei die Bindeeinheiten (7) einen Durchlasskanal mit bogenförmig abgerundeten Seitenschaufeln (11) und (12) ausgestattet sind, und mit einem flachen Boden, entlang dessen sich die losen Weidestäbe bis zum Ende des Kanals in einer beinahe vertikalen Lage bewegen, **gekennzeichnet dadurch, dass** eine der Seitenschaufeln (12) aus zwei Teilen besteht: einem festen Teil (14) an der Einlassseite des Kanals und einem beweglichen Teil (15), in dem die Weidenstäbe zu Zöpfen geformt werden, wobei der feste Teil (14) und der bewegliche Teil (15) der Schaufel (12) mittels eines Flachscharniers (13) mit einer zur Bodenflache senkrechten Rotationsachse verbunden sind, und das andere Ende des beweglichen Teils (15) mit einer Feder (21) und einer Platte (18) ausgestattet ist, die verschiebbar befestigt ist und sich in der Seitenwand des Kanals bewegt, bis das Bündel die erwünschte Breite in dessen Mittelteil erreicht, wonach es einen Signaltransmitter (16) kontaktiert, das ein Signal an einen Aktuator (23) mittels eines Kontrollelements (17) weiterleitet, wobei der Antrieb des mit dem Schaltmechanismus verbundenen Aktuators (23) die Antriebswelle der Bindeeinheiten aktiviert, damit diese eine Rotation der Welle ausführen, mit der die Antriebe der Knotenbildner mit den Antrieben der Nadelsätze 8) verbunden sind, und mit dem der Antrieb der Auswerfer der Weidenbündel verbunden sind, welche dann zum Auslassförderer (9) während dieser einen Rotation befördert werden, und in der Endphase die Bindeeinheiten (7) in deren Anfangsposition verstellt werden, um den nächsten Weidenbündel zu binden und zu befördern.

2. Maschine nach Anspruch 1, **gekennzeichnet dadurch, dass** der Signaltransmitter (16) in Form eines Begrenzungsschalters mit dem beweglichen Teil (15) der in der mittleren Höhe der Durchlasskammer angeordneten Schaufel (12) verbunden ist.

3. Maschine nach Anspruch 1, **gekennzeichnet dadurch, dass** das Kontrollelement durch ein elektromagnetisches Ventil (22) gebildet ist.

4. Maschine nach Anspruch 1, **gekennzeichnet dadurch, dass** der Aktuator durch einen Aktuator (23) gebildet ist, der je nach der Bauweise pneumatisch, hydraulisch oder elektrisch ist.

5. Maschine nach Anspruch 1, **gekennzeichnet dadurch, dass** das Schaltsystem einen Aktuator (23) aufweist, der mittels einen Rasthaken daran angehakt ist, die Elemente der Rastsperre zieht, infolge dessen diese zurückzieht und gleichzeitig die Rotationssperre (27) der Antriebswelle der Knotenbildner zum Drehen bringt, was die Drehung der Knotenbildner und die Aktivierung des Zopfbindeverfahrens bewirkt.

## Revendications

1. Une machine pour la récolte, la liaison et l'empilage des gerbes d'osier tressé, comprend des unités de convoyeur d'alimentation (4) et (5), une écimeuse (10), des unités de bobine et un convoyeur de sortie (9) avec des entraînements directement associés à un engrenage principal et des unités de liaison (7) avec noueurs avec un ensemble d'aiguilles (8) et avec un ensemble d'éjecteurs ayant leurs entraînements associés les uns aux autres et reliés par leur arbre d'entraînement mutuel avec l'engrenage principal (3), de sorte que les unités de liaison (7) ont un canal de passage muni d'ailettes latérales en forme d'arc arrondi (11) et (12) et un fond plat, le long duquel les tiges d'osier lâches se déplacent jusqu'à la fin du canal dans une position proche de la verticale, **caractérisé en ce qu'**une des ailettes latérales (12) est composée de deux parties : une partie fixe (14) sur le côté d'entrée du canal et une partie mobile (15) dans laquelle les tiges en osier sont formées en gerbes, la partie fixe (14) et la partie mobile (15) de l'ailette (12) sont reliées par une charnière plate (13) avec un axe de rotation perpendiculaire à la surface inférieure, et l'autre extrémité de la partie mobile (15) pourvue d'un ressort (21) et une plaque (18) est montée de manière coulissante et se déplace dans la paroi latérale du canal jusqu'à ce que la gerbe atteigne une largeur souhaitée dans sa partie centrale, puis elle se connecte à un émetteur de signal (16) qui transmet un signal à un actionneur (23) par l'intermédiaire d'un élément de commande (17), alors que l'entraînement d'un actionneur (23) couplé au mécanisme de commutation actionne l'arbre d'entraînement des unités de liaison, pour l'exécution d'une rotation de l'arbre, avec lequel les entraînements des noueurs avec les entraînements de l'ensemble des aiguilles (8) et avec l'entraînement des éjecteurs de gerbes en osier sont associés, une gerbe étant liée et ensuite élevée sur le convoyeur de sortie (9) pendant cette rotation, et dans la phase finale les unités de liaison (7) sont fixés dans leur position initiale pour la liaison et le déplacement de la prochaine gerbe en osier.

2. La machine selon la revendication 1, **caractérisée en ce qu'**un émetteur de signal (16) constituant un interrupteur de fin de course est relié à la partie mobile (15) de l'ailette (12) placée à mi-hauteur de la chambre de passage.

3. La machine selon la revendication 1, **caractérisée en ce que** l'élément de commande est constitué par l'électrovanne (22).

4. La machine selon la revendication 1, **caractérisée en ce qu'**un actionneur est constitué par un actionneur (23) qui est, selon sa construction, pneumatique, hydraulique, électrique.

5. La machine selon la revendication 1, **caractérisée en ce que** le système de commutation a un actionneur (23) qui, par l'intermédiaire d'un crochet de verrouillage qui y est accosté, tire les éléments du crochet de verrouillage, en le faisant rétracter et relâche simultanément le verrouillage de rotation (27) de l'arbre d'entraînement des noueurs, ce qui provoque la rotation de l'arbre des noueurs et l'activation du processus de liaison des gerbes.
